## Europäisches Patentamt
## European Patent Office
## Office européen des brevets

(19)

(11) Veröffentlichungsnummer: **0 363 599**
**A2**

(12)
# EUROPÄISCHE PATENTANMELDUNG

(21) Anmeldenummer: 89114699.5

(22) Anmeldetag: 09.08.89

(51) Int. Cl.5: **B07C 5/02**

(30) Priorität: 18.10.88 DE 3835438
10.10.88 DE 8812698 U
31.10.88 DE 8813620 U

(43) Veröffentlichungstag der Anmeldung:
**18.04.90 Patentblatt 90/16**

(84) Benannte Vertragsstaaten:
**AT BE CH DE ES FR GB GR IT LI NL SE**

(71) Anmelder: **JONGE POERINK B.V.**
**Prins Bernhardlaan 51**
**NL-7620 AA Borne(NL)**

(72) Erfinder: **Poerink, Nicolaas Jonge**
**Prins Bernhardlaan 25**
**NL-7622 BD Borne(NL)**

(74) Vertreter: **Patentanwälte Schulze Horn und**
**Hoffmeister**
**Goldstrasse 36**
**D-4400 Münster(DE)**

(54) **Vorrichtung zum Sortieren von Flachdosen.**

(57) Vorrichtung zum Sortieren von Flachdosen aus magnetisierbaren Blechen in einem Transport-, Abfüll- oder Verpackungssystem mit zwei in vertikaler Sicht Abstand von mehr als Dosenhöhe oder Dosendurchmesser zueinander haltenden Transportbändern mit einer Antriebsvorrichtung, wobei das obere Transportband in seiner Längsrichtung mit Magneten zum Aussortieren von Dosen in nicht verpackungsgerechter oder nicht füllgerechter Lage versehen ist, und mit einer Auffangvorrichtung zur Aufnahme der aussortierten Dosen, bei der das obere Transportband (2) an seinem in Transportrichtung (11) weisenden Ende vom unteren Transportband (7) wegführend nach oben hin abgewinkelt ist, wobei sein Laufband (3) mit in seiner Querrichtung angebrachtem, nach außen weisenden, Abstand zueinander haltenden Mitnehmer-Stäben oder -stegen (6) versehen ist.

## Vorrichtung zum Sortieren von Flachdosen

Die Erfindung betrifft eine Vorrichtung zum Sortieren von Flachdosen aus magnetisierbaren Blechen in einem Transport-, Abfüll- oder Verpakkungssystem mit zwei in vertikaler Sicht Abstand von mehr als Dosenhöhe oder Dosendurchmesser zueinander haltenden Transportbändern mit einer Antriebsvorrichtung, wobei das obere Transportband in seiner Längsrichtung mit Magneten zum Aussortieren von Dosen in nicht verpackungsgerechter oder nicht füllgerechter Lage versehen ist, und mit einer Auffangvorrichtung zur Aufnahme der aussortierten Dosen.

Bekannt ist eine Vorrichtung zum Aussortieren von Dosen aus magnetisierbaren Blechen, deren Höhe größer als ihr Querschnitt ist. Diese Vorrichtung besteht im wesentlichen aus zwei angetriebenen, parallel in mehr als Dosenhöhe zueinander verlaufenden Transportbändern, deren oberes mit Magneten versehen ist. Dabei werden aufrecht stehende Dosen im Bereich einer im unteren Transportband über einem Auffangbehälter befindlichen Lücke durch die Magnete angezogen, über die Lücke hinweggeführt und danach wieder auf dem unteren Transportband abgesetzt. Die Magnete sind in ihrer Anziehungsstärke so ausgelegt, daß umgefallene, quer liegende Dosen aufgrund ihrer gegenüber den aufrecht stehenden geringeren Höhe von den Magneten nicht angezogen werden und durch die Aussparung in den unterhalb des unteren Transportbandes vorgesehenen Auffangbehälter fallen. .

Diese Vorrichtung ist jedoch zum Sortieren von Flachdosen, deren Durchmesser größer als ihre Höhe ist, nicht verwendbar.

Es stellt sich daher die Aufgabe, eine Vorrichtung aufzuzeigen, die es ermöglicht, innerhalb eines Transport-, Abfüll- oder Verpackungssystems für Flachdosen, Dosen in einer umgefallenen, d. h. nicht verpackungsgerechten Lage oder einer nicht füllgerechten Lage, d. h. auf dem Kopf stehend und mit der Öffnung dem unteren Transportband zugewandten Lage, auszusortieren.

Diese Aufgabe wird durch die erfindungsgemäße Vorrichtung dadurch gelöst, daß das obere Transportband an seinem in Transportrichtung weisenden Ende vom unteren Transportband wegführend nach oben hin abgewinkelt ist, wobei sein Laufband mit in seiner Querrichtung angebrachten, nach außen weisenden, Abstand zueinander haltenden Mitnehmer-Stäben versehen ist. Dabei ist diese Vorrichtung in einer vorzugsweisen Ausgestaltung sowohl innerhalb des oberen als auch des unteren Transportbandes mit Magneten ausgestattet. Die üblicherweise verwendeten Dosen sind im Querschnitt ca. 20 mm breiter als sie hoch sind.

Das Anziehungsvermögen der Magnete ist so beschaffen, daß die in dem unteren Transportband vorgesehenen Magnete Dosen, die auf ihrer Grundfläche stehen, gegenüber der Anziehungskraft der in dem oberen Transportband vorgesehenen Magnete auf dem unteren Laufband gehalten werden und auf diesem Band weitertransportiert werden. Umgefallene Dosen stehen gegenüber den vorerwähnten Dosen zum oberen Transportband hin weisend um ca. 20 mm über und werden von den oberen Magneten derart angezogen, daß sie an dem oberen Laufband gehaltert werden und durch die Abwinklung des oberen Transportbandes vom unteren weg schräg nach oben befördert werden und am Ende der mit Magneten versehenen Strecke in eine trichterartige Auffang- oder Abführvorrichtung fallen.

Damit die mit ihrer gewölbten Seite von den Magneten an das obere Laufband gezogenen Dosen an dem Laufband Halt finden und bei der Beförderung um die Biegung herum schräg nach oben nicht ins Rollen geraten, ist das Laufband des oberen Transportbandes zu seiner Außenseite hin mit zur Transportrichtung quer liegenden Mitnehmer-Stäben versehen. Diese Stäbe bestehen vorzugsweise aus nichtmagnetisierbarem Stahl mit einer bevorzugten Stärke von ca. 6 - 8 mm und sind in weniger als Dosenabstand zueinander angebracht. Als vorteilhafter Biegewinkel hat sich für das obere Transportband ein Winkel von ca. 30° herausgestellt, bei dem eine Optimierung der Magnetwirkung erreicht werden kann.

Dosen, die sich in nicht füllgerechter Lage befinden, d. h. mit ihrer Öffnung auf dem unteren Transportband stehen, werden, da durch die falsche Lage dieser Dosen der Dosenboden und damit die größere Dosenmasse nach oben zum oberen Transportband hin gerichtet ist, durch den Magneten des oberen Transportbandes angezogen und in gleicher Weise, wie vorher beschrieben, aussortiert.

Die Laufbänder selbst bestehen vorzugsweise aus nichtmagnetisierbarem Kunststoffmaterial, wobei die Oberfläche glatt, gitter- oder auch netzförmig ausgestaltet sein kann. Sie können jedoch auch aus anderen, nichtmagnetisierbaren Materialien, wie z. B. Metallen, bestehen.

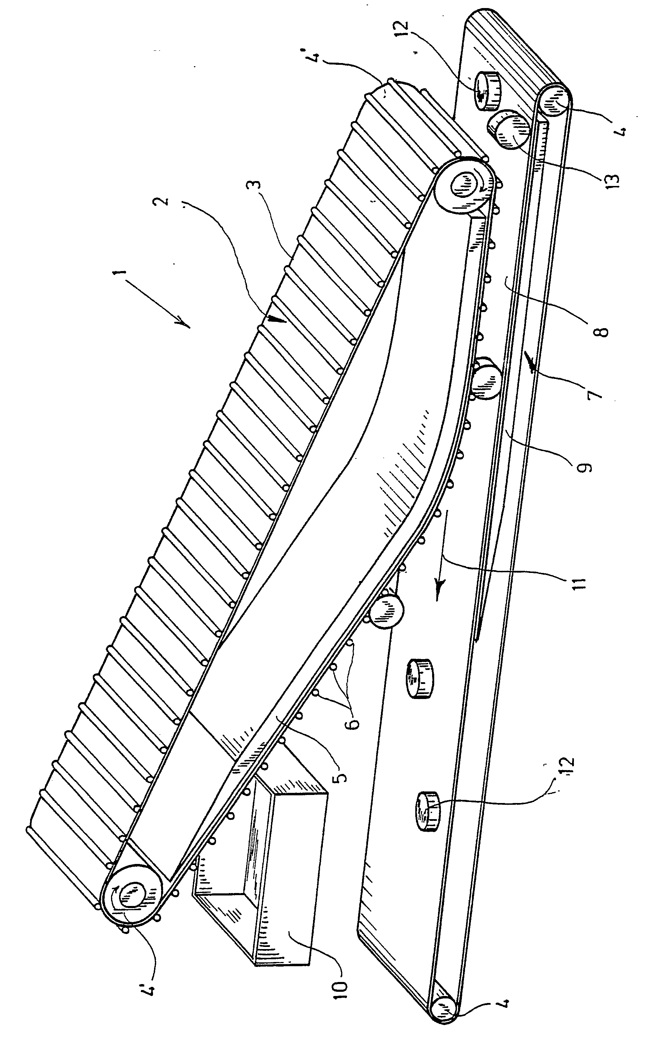

Ein Ausführungsbeispiel einer erfindungsgemäßen Vorrichtung zum Sortieren von Flachdosen ist in der Zeichnung dargestellt und wird im folgenden näher beschrieben.

Die Zeichnungsfigur zeigt in perspektivischer Ansicht eine Ausgestaltungsform einer erfindungsgemäßen Vorrichtung zum Sortieren von Flachdosen. Die Vorrichtung 1 besteht im wesentlichen aus zwei mit Antriebsmitteln 4, 4' versehenen Transportbändern 2, 7, wobei das untere Transport band 7 in seiner Längsrichtung eine waagerechte Stellung einnimmt. Das obere Transportband 2 ist so ausgestaltet, daß sein Laufband 3 mit seiner zum unteren Transportband weisenden Seite in einem in Transportrichtung gesehen vorderen Teil in einem Abstand von geringfügig mehr als Dosenquerschnitt parallel zu dem unteren Transportband verläuft. Das obere Transportband 2 ist etwa in der Mitte seiner Längsseite vom unteren Transportband 7 wegweisend nach oben hin abgewinkelt, wobei als vorteilhafter Biegewinkel ein Winkel von etwa 30° ermittelt worden ist.

Das obere und vorzugsweise auch das untere Transportband sind unterhalb ihrer sich gegenüberliegenden Oberflächen mit Magneten 5, 9 versehen. Dabei endet die Magnetschicht 9 des unteren Transportbandes in Transportrichtung gesehen kurz nach der Abwinklungsstelle des oberen Transportbandes. Es kann jedoch auch ein Magnet oder ein Magnetband auf der gesamten Länge des unteren Transportbandes vorgesehen sein, wobei dieser Magnet oder dieses Magnetband vorzugsweise so ausgestaltet ist, daß die Magnetkraft in Transportrichtung zum Bandende hin abnehmend ist. Die Magnetschicht 5 des oberen Transportbandes endet inetwa oberhalb des Mittelpunktes eines unter ihm vorgesehenen Auffangbehälters oder Auffangtrichters 10. Die Magnetstärke der in den Transportbändern vorhandenen Magneten ist so aufeinander abgestimmt, daß Flachdosen, die in verpackungsgerechter Lage, d. h. auf ihrem Boden stehend, durch die unteren Magnete 9 gegenüber der Anziehungskraft der oberen Magnete 5 auf dem unteren Laufband 8 gehalten werden. Umgefallene Dosen, die Dosen, die auf ihrem Boden stehen zum oberen Laufband 3 hin um etwa 20 mm überragen, werden dagegen von den oberen Magneten gegen das obere Band angezogen. Damit diese Dosen, die mit einem nur geringen Bereich ihrer gewölbten seitlichen Oberfläche an dem Laufband haften, bei dem Transport um den Biegewinkel des oberen Transportbandes herum Halt finden und nicht ins Rollen geraten, ist das Laufband 3 des oberen Transportbandes 2 an seiner nach außen weisenden Seite mit zu seiner Längsrichtung querliegenden Mitnehmerstäben 11 versehen. Diese Mitnehmerstäbe sind auf der Oberfläche des Laufbandes 3 in einem Abstand zueinander von weniger als einem Dosendurchmesser angebracht und bestehen vorzugsweise aus nichtmagnetisierbarem Stahl. Die Mitnehmerstäbe können jedoch auch aus Kunststoff hergestellt sein.

Gleichfalls von dem oberen Magneten oder dem oberen Magnetband angezogen und aussortiert werden Dosen, die sich in nicht füllgerechter Lage, d. h. mit ihrer Öffnung dem unteren Transportband zugewandt befinden und dadurch mit dem Dosenboden und somit mit der größeren Dosenmasse dem oberen Transportband zugewandt sind.

Für die Herstellung der Laufbänder 3 und 8 der Transportbänder 2 und 7 findet vorzugsweise Kunststoffmaterial mit glatter oder auch gitter- oder netzförmiger Oberflächenstruktur Verwendung. Für die Fertigung der Transportbänder können jedoch auch nichtmagnetisierbare andere Materialien, wie z. B. Metalle verwendet werden.

Bei dem Einsatz einer erfindungsgemäßen Vorrichtung innerhalb eines Transport-, Abfüll- oder Verpackungssystems für Flachdosen ist somit sichergestellt, daß Dosen in verpackungsgerechter Lage, d. h. auf ihrem kreisflächigen Dosenboden stehend, oder Dosen in füllgerechter Lage, d.h. mit der Dosenöffnung zum oberen Transportband hinweisend, auf dem unteren Laufband verbleiben und innerhalb des Systems weiterbefördert werden, während auf der Seite liegende Dosen oder Dosen, die mit ihrer Öffnung auf dem unteren Transportband stehen, durch die erfindungsgemäße Ausgestaltung des oberen Transportbandes in ein Auffangsystem aussortiert und dem Transport-, Abfüll- oder Verpackungssystem somit entzogen werden.

## Ansprüche

1. Vorrichtung zum Sortieren von Flachdosen aus magnetisierbaren Blechen in einem Transport-, Abfüll- oder Verpackungssystem mit zwei in vertikaler Sicht Abstand von mehr als Dosenhöhe oder Dosendurchmesser zueinander haltenden Transportbändern mit einer Antriebsvorrichtung, wobei das obere Transportband in seiner Längsrichtung mit Magneten zum Aussortieren von Dosen in nicht verpackungsgerechter oder nicht füllgerechter Lage versehen ist, und mit einer Auffangvorrichtung zur Aufnahme der aussortierten Dosen,
dadurch gekennzeichnet, daß das obere Transportband (2) an seinem in Transportrichtung (11) weisenden Ende vom unteren Transportband (7) wegführend nach oben hin abgewinkelt ist, wobei sein Laufband (3) mit in seiner Querrichtung angebrachten, nach außen weisenden, Abstand zueinander haltenden Mitnehmer-Stäben oder -stegen (6) versehen ist.

2. Vorrichtung nach Anspruch 1,
dadurch gekennzeichnet, daß die Mitnehmer-Stäbe oder -stege (6) aus nichtmagnetisierbarem Stahl oder anderem nichtmagnetisierbarem Material bestehen.

3. Vorrichtung nach Anspruch 1,
dadurch gekennzeichnet, daß das obere (2) und untere (7) Transportband unterhalb ihrer einander zugewandten Oberflächen mit einem oder mehreren Magneten oder Magnetbändern (5, 9) versehen sind.

4. Vorrichtung nach den Ansprüchen 1 und 3, dadurch gekennzeichnet, daß das untere Transportband (7) einen ungefähr mit dem Biegungsende des oberen Transportbandes (2) abschließenden Magneten (9) aufweist.

5. Vorrichtung nach den Ansprüchen 1 und 3, dadurch gekennzeichnet, daß das untere Transportband (7) einen oder mehrere in Transportrichtung zum Bandende hin mit abnehmender Magnetkraft ausgestattete Magnete (9) aufweist.

6. Vorrichtung nach den Ansprüchen 1 und 3 bis 5, dadurch gekennzeichnet, daß das obere Transportband (2) mit einem um seine Biegung herum bis oberhalb des Mittelpunktes einer Auffangvorrichtung (10) reichenden Magneten (5) versehen ist.

7. Vorrichtung nach den Ansprüchen 1, 3 bis 6, dadurch gekennzeichnet, daß die Magnete (5, 9) Permanentmagnete sind.

8. Vorrichtung nach einem der vorhergehenden Ansprüche, dadurch gekennzeichnet, daß die Laufbänder (3, 8) der Transportbänder (2, 7) aus Kunststoff oder einem anderen nichtmagnetisierbarem Material bestehen.

9. Vorrichtung nach einem der vorhergehenden Ansprüche, dadurch gekennzeichnet, daß die Laufbänder (3, 8) eine glatte oder auch gitterförmig gestaltete Oberfläche aufweisen.

10. Vorrichtung nach Anspruch 1, dadurch gekennzeichnet, daß die mit ihrer Öffnung nach oben weisende Auffangvorrichtung (10) in einem Abstand von mehr als Dosenquerschnitt oberhalb des unteren Transportbandes an der Vorrichtung angebracht ist.